# EUROPÄISCHE PATENTSCHRIFT

(11) **EP 2 625 054 B1**
(45) Veröffentlichungstag und Bekanntmachung des Hinweises auf die Patenterteilung: **20.07.2016**
(21) Anmeldenummer: 11757174.5
(22) Anmeldetag: 09.09.2011
(51) Int. Cl.: B60K 23/08, B60K 6/52, B60W 40/068

(54) **KRAFTFAHRZEUG MIT EINEM ALLRADANTRIEB**
ALL-WHEEL DRIVE MOTOR VEHICLE
VÉHICULE À MOTEUR À TRANSMISSION INTÉGRALE

(30) Priorität: 04.10.2010 DE 102010047443
(43) Veröffentlichungstag der Anmeldung: 14.08.2013
(73) Patentinhaber: Audi AG, 85045 Ingolstadt (DE)
(72) Erfinder: STRASSER, Sebastian, 85051 Ingolstadt (DE)
(74) Vertreter: Herbst, Matthias Heinz
(86) Internationale Anmeldenummer: PCT/EP2011/004542
(87) Internationale Veröffentlichungsnummer: WO 2012/045386

(56) Entgegenhaltungen:
- WO-A1-2004/039621
- JP-A- 2008 301 564
- JP-A- 2010 241 166

## Beschreibung

Die Erfindung betrifft ein Fahrzeug mit einem Allradantrieb nach dem Oberbegriff des Patentanspruches 1.

Das Dokument WO 2004/039621 A1 offenbart den Oberbegriff des Anspruchs 1.

Bei Fahrzeugen mit einem Hybridantriebssystem, bestehend aus einer Brennkraftmaschine und einer Elektromaschine, kann die Elektromaschine in einem Rekuperationsbetrieb die kinetische Energie des Fahrzeuges unter gleichzeitiger Beaufschlagung eines Rekuperations- oder Schleppmoments auf die Fahrzeugräder elektrische Energie induzieren. Bei einem Fahrzeug mit Allradantriebssystem können daher nicht nur das Antriebsmoment, sondern auch konzeptabhängige Anteile des Schleppmomentes auf die Vorderachse und/oder auf die Hinterachse abgesetzt werden. Diese Schleppmomente können insbesondere bei einem Straßenbelag mit Niedrigreibbwert zu einem hohen Bremsschlupf führen. Dies resultiert wiederum in einer Absenkung der Seitenführungskraft und dadurch in einem instabilen Fahrverhalten.

Aus der DE 103 04 813 A1 ist ein gattungsgemäßes Fahrzeug mit einem Allradantriebssystem bekannt. Das Antriebssystem weist ein Zwischenachsdifferenzial auf, das das Antriebsmoment auf ein Vorderachsdifferenzial und ein Hinterachsdifferenzial verteilt, über die die Vorderräder und die Hinterräder angetrieben werden. Das Zwischenachsdifferenzial weist eine die Antriebsmomentenverteilung beeinflussende Kupplung auf. Diese ist abhängig von Betriebsparametern des Fahrzeugs zur variablen Verteilung der Antriebsmomente ansteuerbar.

Die Vorder- und Hinterachsgetriebe sind in der DE 103 04 813 A1 unterschiedlich übersetzt. Diese unterschiedlich übersetzten Achsgetriebe ergeben bei der Betätigung der Kupplung mit einem Differenzmoment eine Differenzzahl zwischen den Achsen. Das Differenzmoment kann in Abweichung zur DE 103 04 813 A1 sowie zur Erfindung gegebenenfalls auch ohne Einsatz einer solchen Kupplung bzw. unterschiedlicher Achsübersetzungen dargestellt werden.

Zur Durchführung einer ESP-Regelung oder einer ABS-Regelung weisen moderne Fahrzeuge zudem bereits serienmäßig Radsensoren auf, die die Raddrehzahlen der Vorderräder und Hinterräder im Fahrbetrieb erfassen. Da jedoch der jeweils aktuelle Straßenreibwert und das maximal auf die Straße absetzbare Rekuperationsmoment nicht bekannt sind, muss die Rekuperationsleistung des Hybridantriebes und damit der mögliche Effizienzvorteil in jeder Fahrsituation so begrenzt werden, dass ein instabiles Fahrverhalten verhindert ist. Dadurch wird jedoch auch zwangsläufig die im Bordnetz speicherbare, während des Rekuperationsbetriebes gewonnene elektrische Energie begrenzt.

Die Aufgabe der Erfindung besteht darin, ein Fahrzeug bereitzustellen, mit dem eine einfache Ermittlung des Straßenreibwertes ermöglicht ist.

Die Aufgabe ist durch die Merkmale des Patentanspruches 1 gelöst. Bevorzugte Weiterbildungen sind in den Unteransprüchen offenbart.

Die Erfindung geht von dem Sachverhalt aus, dass sich bei einer Momentendifferenz zwischen der Vorderachse und der Hinterachse jeweils unterschiedlich große vorderachsseitige und hinterachsseitige Drehzahlen ergeben. Unter vorder- und hinterachsseitigen Drehzahlen in der Erfindung werden etwa die Drehzahlen der Vorder- und Hinterräder des Fahrzeuges verstanden. Alternativ sind auch die Drehzahlen der von einem Zwischenachsdifferenzial zu einem vorderen und einem hinteren Achsdifferenzial geführten Abtriebswellen zu verstehen.

Die Drehzahldifferenzen zwischen Vorder- und Hinterachse sowie die jeweils zugehörigen Momentendiffererizen ergeben Wertepaare. Anhand von Untersuchungen konnte festgestellt werden, dass bei Straßenbelägen mit an sich unbekannten Oberflächeneigenschaften aus den oben erwähnten Wertepaaren Rückschlüsse auf den aktuellen Reibwert der Straße geführt werden können. Die Erfindung beruht demzufolge auf der Erkenntnis, dass sich bei Straßenbelägen mit unterschiedlichen Reibwerten sowie bei konstanter Momentendifferenz unterschiedlich stark ausgeprägte Drehzahldifferenzen zwischen den vorder- und hinterachsseitigen Drehzahlen ergeben. Gemäß dem kennzeichnenden Teil des Patentanspruches 1 weist nunmehr das Fahrzeug eine Einheit zur Ermittlung eines Straßenreibwertes auf, die die Drehzahldifferenz zwischen der vorder- und hinterachsseitigen Drehzahl erfasst. Die Einheit ist so ausgelegt, dass auf der Grundlage der erfassten Drehzahldifferenz sowie der zugehörigen Momentendifferenz zwischen dem Vorder- und Hinterachsantriebsmoment der Straßenreibwert ermittelbar ist. Der so ermittelte Reibwert kann als zusätzlicher Parameter bei unterschiedlichen Regelvorgängen berücksichtigt werden. Dabei ist bereits eine grobe Abschätzung, ob die Fahrbahn einen Niedrigreibwert, einen mittleren Reibwert oder einen Hochreibwert aufweist, bedeutsam zur Steigerung der Güte von Regelvorgängen.

Die sich tatsächlich zwischen der Vorder- und Hinterachse ergebende Ist-Momentendifferenz ist nur mit sensortechnisch großem Aufwand erfassbar. Die oben genannte Einheit ermittelt daher den Reibwert nicht auf der Grundlage der Ist-Momentendifferenz, sondern einer vorgegebenen Soll-Momentendifferenz sowie der sich ergebenden Ist-Drehzahldifferenz, die problemlos etwa durch Raddrehzahlsensoren erfassbar ist.

Zur Ermittlung des Reibwertes kann in der erfindungsgemäßen Einheit ein Kennfeld tabellarisch hinterlegt sein, aus dem anhand des Wertepaars, bestehend aus der eingestellten Momentendifferenz zwischen Vorder- und Hinterachsantriebsmoment und der erfassten Drehzahldifferenz, der Reibwert des Straßenbelags abschätzbar ist. Wie oben erwähnt genügt bereits eine grobe Einteilung in Hochreibwert, mittlerem Reibwert oder Niedrigreibwert.

Das oben erwähnte Kennfeld kann empirisch aus Versuchen ermittelt werden, und zwar bei anhand von Straßenbelägen mit jeweils bekannten Hoch-, Mittel- oder Niedrigreibwert sowie mit vordefinierten, beispielsweise aus Reifen-Kennfelder gewonnenen unterschiedlichen Momentendifferenzen und Drehzahldifferenzen. Die Wertepaare aus Momentendifferenzen und zugehörigen Drehzahldifferenzen werden in das Kennfeld eingetragen. Daraus ergeben sich im Kennfeld für den jeweils vorbekannten Hoch-, Mittel- und Niedrigreibwert Wertepaar-Gruppen, die im Kennfeld örtlich unterschiedlich liegen. Durch Extrapolieren kann jede der Hochreibwert-, Mittelreibwert- und Niedrigreibwert-Gruppen als ein Reibwert-Feld im Kennfeld dargestellt werden.

Das in der oben erwähnten Versuchs-Betriebsart ermittelte Kennfeld kann im normalen Fahrbetrieb der Reibwert-Ermittlung zugrunde gelegt werden. In diesem Fall wird ein Wertepaar aus Momentendifferenz und Drehzahldifferenz erfasst. Das Wertepaar wird in das Kennfeld als Schnittpunkt eingetragen, der sich entweder im Hochreibwert-Feld, im Niedrigreibwert-Feld oder im Mittelreibwert-Feld wiederfindet.

Alternativ oder zusätzlich dazu kann auf der Grundlage von Reifenkennfeldern und von analytischen Zusammenhängen der Reibwert ausgehend von Momentendifferenzen sowie Drehzahldifferenzen berechnet werden. Bei der Berechnung bzw. bei der empirischen Bestimmung des Kennfeldes können darüberhinaus Streuungen, Ungenauigkeiten des Systems und Änderungen von Fahrzeug- und Reifendaten berücksichtigt werden. Auf diese Weise erhält man als Kennfeld ein Differenzmoment-Differenzdrehzahl-Diagramm.

Wie oben bereits angedeutet, kann das so generierte Kennfeld in einem Fahrbetrieb wie folgt abgeschätzt werden: Zunächst wird die sich auf das Differenzmoment einstellende Drehzahldifferenz erfasst. Diese beiden IstWerte werden in das in der Einheit hinterlegte Kennfeld eingetragen. Je nach Straßenbelag liegt das Wertepaar aus dem Differenzmoment und der sich einstellenden Ist-Drehzahldifferenz in dem Hochreibwertfeld, dem Mittelreibwertfeld oder dem Niedrigreibwertfeld. Damit kann abgeschätzt werden, ob sich das Fahrzeug mit dem Wertepaar auf einer Fahrbahn mit Hoch-, Mittel- oder Niedrigreibwert bewegt.

Erfindungsgemäß ist die Drehzahldifferenz zwischen einer vorder- und hinterachsseitigen Drehzahl zur Ermittlung des Reibwertes heranzuziehen. Zur besonders einfachen Erfassung der Drehzahldifferenz können bevorzugt Radsensorelemente eingesetzt werden, die ohnehin im Fahrzeug verbaut sind, um eine ABS- oder eine ESP-Regelung zu ermöglichen. Entsprechend sind bei dieser Ausführungsform keine zusätzlichen Sensorelemente zur Bestimmung der Drehzahldifferenz erforderlich.

Das Allradantriebssystem des Fahrzeuges kann eine Momentenverteilungseinheit aufweisen, mit der auf eine Vorgabe eine Antriebsmomentenverteilung des Antriebsmomentes auf die Vorderachse und auf die Hinterachse einstellbar und/oder änderbar ist. Um eine Reibwertermittlung zu ermöglichen, ist jedoch dafür Sorge zu tragen, dass zumindest bei der Erfassung der Ist-Drehzahldifferenz eine Momentendifferenz zwischen den Achsen eingestellt ist.

Die Momentenverteilungseinheit kann in einer Ausführungsvariante eine elektronische Berechnungseinheit sein, die aufgrund der Grundlage unterschiedlicher Betriebsparameter einen Vorderachsantrieb sowie einen Hinterachsantrieb so ansteuert, dass sich das vorgegebene Gesamt-Antriebsmoment ergibt. Alternativ dazu kann die Momentenverteilungseinheit als ein Zwischenachsdifferenzial ausgebildet sein, das das Antriebsmoment auf ein Vorderachsdifferenzial und ein Hinterachsdifferenzial aufteilt. Über die Vorder- und Hinterachsdifferen ziale werden wiederum die Vorder- und Hinterräder angetrieben. In diesem Fall kann das Zwischenachsdifferenzial beispielsweise eine, die Abtriebsmomentenverteilung beeinflussende Kupplung aufweisen. Die Kupplung kann abhängig von den Betriebsparametern des Fahrzeugs zur variablen Verteilung der Antriebsmomente angesteuert werden und führt bei Aktivierung zu einer Differenzdrehzahl.

Bei einem derart gestalteten Antriebssystem kann von einem Getriebeausgangsmoment, das in das Zwischenachsdifferenzial geleitet wird, und dem Kupplungsmoment der im Zwischenachsdifferenzial integrierten Kupplung in einfacher Weise auf das Differenzmoment geschlossen werden.

Die erfindungsgemäße Schätzung des Reibwertes ist insbesondere im Hinblick auf eine Steigerung der Rekuperationsleistung einer im Antriebssystem eingesetzten Elektromaschine von Vorteil. Bekanntermaßen kann die Elektromaschine nicht nur als Motor, sondern auch als Generator eingesetzt werden, der in einem Rekuperationsbetrieb unter Ausübung eines Rekuperationsmomentes auf die Fahrzeugräder der Vorder- und/oder Hinterachse elektrische Energie induziert, die im Bordnetz gespeichert wird. Das Rekuperationsbeziehungsweise Schleppmoment kann insbesondere bei Straßenbelägen mit Niedrigreibwert zu einem hohen Bremsschlupf führen, wodurch eine Seitenführungskraft reduziert wird und sich daraus ein instabiles Fahrverhalten ergeben kann. Da in herkömmlichen Fahrzeugen keine Informationen über den aktuellen Reibwert vorliegen, ist der maximal mögliche Rekuperationsmoment aus Sicherheitsgründen auf einen Grenzwert beschränkt, der auch unter ungünstigen Fahrbedingungen nicht zu einem instabilen Fahrverhalten führt.

Erfindungsgemäß ist dagegen das maximal mögliche Rekuperationsmoment nicht auf einen Grenzwert festgelegt, sondern kann das maximal auf die Straße absetzbare Rekuperationsmoment in Abhängigkeit von dem aktuellen Straßenreibwert variiert werden. Das heißt, dass bei einer Fahrbahn mit Hochreibwert das maximal mögliche Rekuperationsmoment angehoben wird, da kein zu hoher Bremsschlupf zu befürchten ist. Dadurch kann insbesondere bei einer Fahrbahn mit Hochreibwert im Vergleich zum Stand der Technik eine zusätzliche Rekuperationsleistung generiert werden. Gleichzeitig ist die Fahrzeugstabilität unabhängig vom jeweils aktuellen Reibwert sichergestellt.

Zur Durchführung einer Fahrzeugverzögerung wird erfindungsgemäß von einer elektronischen Steuereinrichtung unter Berücksichtigung des maximal möglichen Rekuperationsmoments ein Bremsmoment ermittelt, mit dem die Fahrzeugradbremsen beaufschlagt werden müssen, um dem Fahrerwunsch zu folgen. Das maximal mögliche Rekuperationsmoment wird von der elektronischen Steuereinrichtung in Abhängigkeit von dem eingeschätzten Reibwert festgelegt.

Nachfolgend sind zwei Ausführungsbeispiele der Erfindung anhand der beigefügten Figuren beschrieben.

Es zeigen:
- Fig. 1: in einer schematischen Ansicht ein Antriebssystem eines Kraftfahrzeugs gemäß dem ersten Ausführungsbeispiel;
- Fig. 2: ein Blockschaltdiagramm, anhand dem die Einstellung des maximal möglichen Rekuperationsmomentes der Elektromaschine für den Hinterachsantrieb veranschaulicht ist;
- Fig. 3: das Kennfeld, das in der Einheit zur Ermittlung des Straßenreibwertes hinterlegt ist; und
- Fig. 4: in einer schematischen Darstellung ein Antriebssystem eines Kraftfahrzeugs gemäß dem zweiten Ausführungsbeispiel.

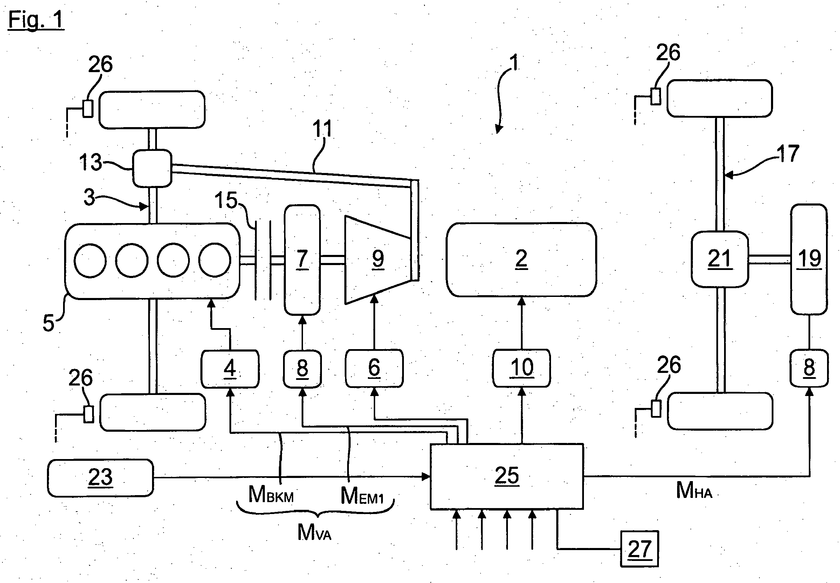

In der Fig. 1 ist in einer Prinzipdarstellung das Antriebssystem eines Hybridfahrzeuges gezeigt, das mit einer Allradantriebseinheit 1 versehen ist. An der vorderen Fahrzeugachse 3 ist eine Brennkraftmaschine 5 sowie eine Elektromaschine 7 in einen Antriebsstrang geschaltet und mit dem Getriebe 9 in Verbindung. Das Getriebe 9 ist über eine Getriebeausgengswelle 11 sowie ein nur angedeutetes Achsdifferenzial 13 in trieblicher Verbindung mit den Fahrzeugrädern der Vorderachse 3. Zwischen der Brennkraftmaschine 5 und der Elektromaschine 7 ist ein Kupplungselement 15 geschaltet, das je nach Fahrsituation geöffnet oder geschlossen ist.

An der Hinterachse 17 des Kraftfahrzeuges ist eine weitere Elektromaschine 19 angeordnet, die die beiden hinteren Fahrzeugräder über ein Achsdifferenzial 21 antreibt.

Soweit es für das Verständnis der Erfindung erforderlich ist, sind in der Fig. 1 der Vorderachsantrieb und der aus der Elektromaschine 19 bestehende Hinterachsantrieb skizziert. Weitere Antriebskomponenten, etwa die Hochvoltbatterie 2 zur Stromversorgung der beiden Elektromaschinen 7, 19 oder etwa das Motorsteuergerät 4, das Getriebesteuergerät 6, die Leistungselektronik 8 der beiden Elektromaschinen 7, 19 oder das Batteriesteuergerät 10, sind ohne nähere Beschreibung nur grob angedeutet.

Für die Ansteuerung der Antriebsaggregate 5, 7, 19 ist eine zentrale elektronische Steuereinrichtung 25 vorgesehen. Die Steuereinrichtung 25 erfasst den Fahrerwunsch in der Fig. 1 beispielhaft mittels eines Pedalmoduls 23 eine fahrerseitig vorgenommene Änderung des Fahrpedalwinkels. Zusätzlich erfasst die Steuereinrichtung 25 als Eingangsparameter unter anderem eine verfügbare Batterieleistung, die Wirkungsgradkennfelder sämtlicher Antriebsaggregate 5, 7, 19, Umgebungs- beziehungsweise Aggregate-Temperaturen, Fahrdynamikgrenzen, etc., wodurch eine achsbezogene Antriebsmomentenverteilung ermöglicht ist.

Auf der Grundlage dieser Eingangsgrößen berechnet die Steuereinrichtung 25 ein Differenzmoment ΔM und sich daraus ergebend ein Soll-Antriebsmoment M_{VA} für die Vorderachse 3und ein Soll-Antriebsmoment M_{HA} für die Hinterachse 17.

Gemäß der Fig. 1 ist der Vorderräder und der Hinterräder jeweils ein Radsensor 26 zugeordnet. Die Radsensoren 26 sind jeweils signaltechnisch in Verbindung mit der elektronischen Steuereinrichtung 25 zur Durchführung einer ABS- oder EPS-Regelung. Zudem ist die elektronische Steuereinrichtung 25 signaltechnisch verknüpft mit einer Einheit 27 zur Ermittlung des Reibwertes der Fahrbahn.

Die von der Steuereinrichtung 25 vorgenommene Momentenverteilung erfolgt in Abhängigkeit von an sich bekannten Eingangsparametern sowie unter Berücksichtigung von Parametern einer Fahrerassistenzregelung, die hier nicht näher gezeigt ist. Durch die elektronische Steuereinrichtung 25 ist eine achsbezogene Momentenverteilung ermöglicht. Die in der elektronischen Steuereinrichtung 25 generierten Sollmomente M_{VA}, M_{HA} für die Vorder- und Hinterachsen 3, 17 werden voneinander unabhängig jeweils zur Vorderachse 3 und zur Hinterachse 17 geleitet.

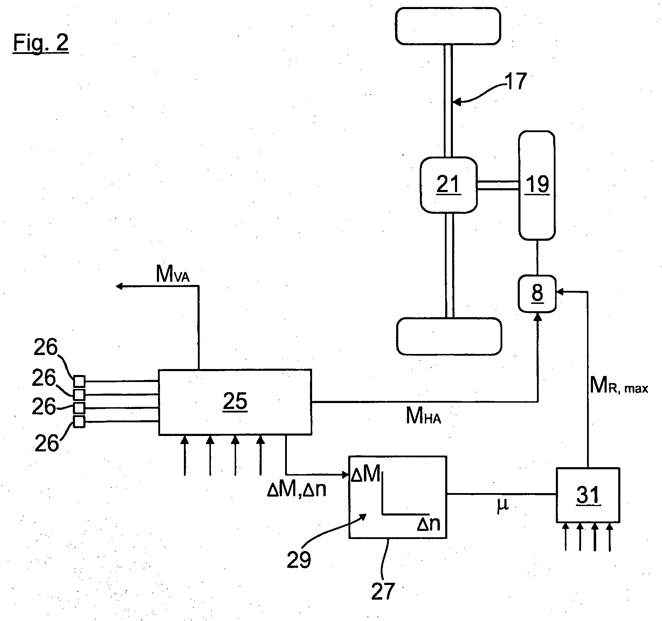

Zur Ermittlung des Reibwertes in der Einheit 27 muss die Steuereinrichtung 25 die Hinterachse 17 mit unterschiedlich großen Antriebsmomenten M_{VA} und M_{HA} antreiben. Die Momentendifferenz ΔM aus den unterschiedlich großen Vorder- und Hinterachsmomenten M_{VA} und M_{HA} wird gemäß der Fig. 2 an die Einheit 27 geleitet. Zusätzlich wird auch die sich ergebende Drehzahldifferenz Δn zwischen den Vorderrädern und den Hinterrädern zur Einheit 27 geleitet. Die Drehzahldifferenz Δn wird mithilfe der Radsensoren 26 ebenfalls in der elektronischen Steuereinrichtung 25 ermittelt.

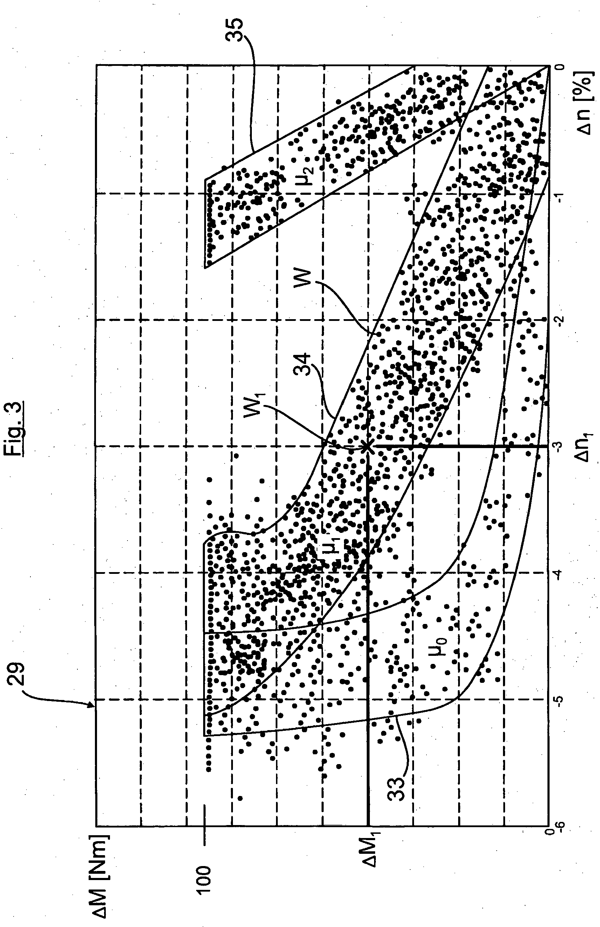

In der Einheit 27 ist ein in der Fig. 2 nur angedeutetes Kennfeld 29 hinterlegt, das später anhand der Fig. 3 näher beschrieben ist. Aus dem Kennfeld 29 wird anhand der erfassten Momentendifferenz ΔM und der erfassten Drehzahldifferenz Δn abgeschätzt, ob die Fahrbahn einen Niedrigreibwert µ₀, einen Mittelreibwert p₁ oder einen Hochreibwert µ₂ aufweist. Ein Hochreibwert µ₂ ergibt sich etwa auf Asphalt, während ein Mittelreibwert µ₁ sich bei Schnee und ein Niedrigreibwert µ₀ sich bei Eis einstellt.

Der in der Einheit 27 abgeschätzte Reibwert wird in der Fig. 2 zu einem Rekuperationsmanager 31 geleitet. Der Rekuperationsmanager 31 bestimmt in Abhängigkeit von dem erfassten Reibwert ein maximal auf die Straße absetzbares Rekuperationsmoment M_{R,max}, das die Elektromaschine 19 im Rekuperationsbetrieb auf die Straße absetzen kann, ohne dass sich an der Hinterachse 17 ein zu hoher Bremsschlupf mit daraus resultierendem instabilen Fahrverhalten ergibt. Die Größe des Rekuperationsmoments M_{R,max} ist dabei abhängig davon, ob ein Niedrigreibwert µ₀, ein Hochreibwert µ₂ oder ein Mittelreibwert µ₁ abgeschätzt worden ist. Um bei einem abgeschätzten Niedrigreibwert µ₀ einen zu hohen Bremsschlupf beim Rekuperationsbetrieb zu vermeiden, wird das maximal auf die Straße absetzbare Rekuperationsmoment M_{R,max} im Rekuperationsmanager 31 entsprechend reduziert. Im Gegenzug kann bei Abschätzung eines Hochreibwertes µ₁ der Rekuperationsmanager 31 das maximal mögliche Rekuperationsmoment M_{R,max} hochsetzen, um die mögliche Rekuperationsleistung zu maximieren.

In der Fig. 3 ist das Kennfeld 29 als ein Momentendifferenz-Drehzahldifferenz-Diagramm dargestellt. In dem Diagramm 29 sind jeweils Reibwert-Felder 33, 34, 35 eingetragen, die jeweils einem Niedrigreibwert µ₀, einen Mittelreibwert µ₁ und einem Hochreibwert µ₂ entsprechen. Zur Bestimmung des aktuellen Reibwertes wird in der Fig. 3 zunächst ein Wertepaar W₁, bestehend aus der Momentendifferenz ΔM₁ und einer sich daraus ergebenden Drehzahldifferenz Δn₁ in die Einheit 27 eingelesen. Beispielhaft liegt in der Fig. 3 eine Momentendifferenz ΔM₁ bei 50Nm und die sich daraus ergebende Drehzahldifferenz Δn₁ bei -3%. Das Wertepaar W₁ aus ΔM₁ und Δn₁ ist als Schnittpunkt im Kennfeld 29 darstellbar, der im Mittelreibwert-Feld 34 liegt. Folglich ergibt sich aus dem Diagramm 29 ein Mittelreibwert, wie er sich bei schneebedeckter Fahrbahn einstellt.

Das in der Fig. 2 gezeigte Diagramm 29 mit den unterschiedlichen Reibwert-Feldern 33, 34, 35 wird in empirisch durchgeführten Versuchen ermittelt, und zwar bei Straßenbelägen mit vordefiniertem Hochreibwert µ₂, mit vordefiniertem Mittelreibwert µ₁ und mit vordefiniertem Niedrigreibwert µ₀. Bei derart bekannten Reibwerten werden unterschiedlich große Momentendifferenzen ΔM auf die Vorder- und Hinterachse 3, 17 aufgeprägt. Die sich dadurch ergebenden Wertepaare W werden in das Kennfeld 29 als Punkte eingetragen.

Dadurch ergibt sich eine Vielzahl von in der Fig. 3 gezeigten Wertepaar-Punkten W, die jeweils einem bekannten Niedrig-, Hoch- oder Mittelreibwert µ₀, µ₁, µ₂ zugeordnet sind. Daraus können in einem nächsten Schritt die Reibwert-Felder 33, 34, 35 im Diagramm 29 extrapoliert werden.

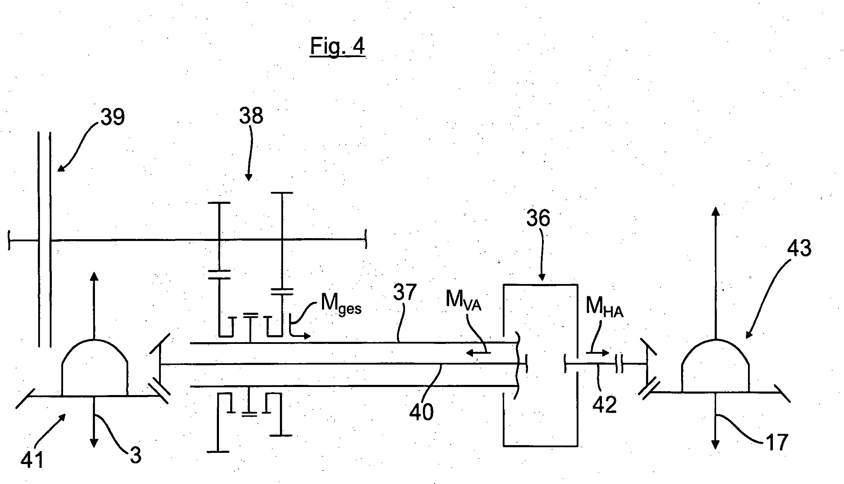

In der Fig. 4 ist das Antriebssystem gemäß einem zweiten Ausführungsbeispiel gezeigt. In diesem Fall erfolgt die Antriebsmomentenverteilung nicht auf der Grundlage einer elektronischen Steuereinrichtung 25, sondern vielmehr mithilfe eines mechanischen Zwischenachsdifferenzials 36. Das Zwischenachsdifferenzial 36 ist eine als Hohlwelle 37 ausgeführte Antriebswelle mit einem Getriebeausgang eines Geschwindigkeits-Wechselgetriebes 38 in Verbindung. Das Getriebe 38 ist in an sich bekannter Weise über eine Trennkupplung mit einem Antriebsaggregat verbunden. Das Zwischenachsdifferenzial über eine Abtriebswelle 40 mit einem Vorderachsdifferenzial 41 trieblich verbunden, das nicht dargestellte Vorderräder antreibt. Zudem ist das Zwischenachsdifferenzial 36 ist über eine Antriebswelle 42 mit einem Hinterachsdifferenzial 43 verbunden, mit dem Hinterräder antreibbar sind.

In dem Zwischenachsdifferenzial 36 ist eine nicht näher gezeigte, die Antriebsmomentenverteilung beeinflussende Kupplung vorgesehen. In

Differenzmoment ΔM eingestellt werden. Bei einem solchen Antriebssystem kann das Differenzmoment ΔM besonders einfach aus dem Getriebeausgangsmoment M_{ges} und dem jeweils eingestellten Kupplungsmoment der im Zwischenachsdifferenzial 36 integrierten Kupplung berechnet werden.

## Patentansprüche

1. Fahrzeug mit einem Allradantriebssystem, bei dem die Vorderachse (3) und die Hinterachse (17) des Fahrzeugs mit unterschiedlich großen Vorderachs- und Hinterachsmomenten (M_{VA}, M_{HA}) antreibbar sind, wobei sich aus einer Momentendifferenz (ΔM₁) zwischen den Vorderachs- und Hinterachsmomenten (M_{VA}, M_{HA}) eine Drehzahldifferenz (Δn₁) zwischen einer vorderachsseitigen Drehzahl (n_{VA}) und einer hinterachsseitigen Drehzahl (n_{HA}) ergibt, wobei das Fahrzeug eine Einheit (27) zur Ermittlung eines Straßenreibwertes (µ₀, µ₁, µ₂) aufweist, die die Drehzahldifferenz (Δn₁) erfasst, und die Einheit (27) auf der Grundlage eines aus der Drehzahldifferenz (Δn₁) und der Momentendifferenz (ΔM₁)oder damit korrelierenden Parameter bestehenden Wertepaars (W₁) den Straßenreibwert (µ₀, µ₁, µ₂) ermittelt und das Antriebsmoment des Fahrzeugs von zumindest einer Elektromaschine (19) erzeugbar ist, die in einem Rekuperationsbetrieb unter Ausübung eines Rekuperationsmoments (M_{R}) auf die Fahrzeugräder der Vorderachse (3) und/oder der Hinterachse (17) eine elektrische Spannung induziert, **dadurch gekennzeichnet, dass** der Elektromaschine (19) ein Rekuperationsmanager (31) zugeordnet ist, der das auf die Fahrzeugräder der Vorderachse (3) und der Hinterachse (17) ausübbare Rekuperationsmoment (M_{R}) auf einen oberen Grenzwert, dass heißt ein maximal mögliches Rekuperationsmoment (M_{R,max}), begrenzt, und dass das Grenzmoment (M_{R,max}) und/oder die Verteilung des Rekuperationsmoments (M_{R}) auf die Vorderachse (3) und die Hinterachse (17) in Abhängigkeit vom ermittelten Reibwert (µ₀, µ₁, µ₂) variierbar ist.

2. Fahrzeug nach Anspruch 1, **dadurch gekennzeichnet, dass** in der Einheit (27) ein Kennfeld (29) hinterlegt ist, aus dem anhand der eingestellten Momentendifferenz (ΔM₁) und der erfassten Drehzahldifferenz (Δn₁) der Reibwert (µ₀, µ₁, µ₂) der Straße abschätzbar ist.

3. Fahrzeug nach Anspruch 2, **dadurch gekennzeichnet, dass** die Generierung des Kennfeldes (29) bei Straßen mit jeweils bekanntem Reibwert (µ₀, µ₁, µ₂) erfolgt, und dass unter Vorgabe unterschiedlicher Momentendifferenzen (ΔM) die sich jeweils ergebenden Drehzahldifferenzen (Δn) erfassbar sind, wobei die sich aus den Momentendifferenzen (ΔM) und den Drehzahldifferenzen (Δn) ergebenden Wertepaare (W) in das Kennfeld (29) eintragbar sind.

4. Fahrzeug nach einem der vorhergehenden Ansprüche, **dadurch gekennzeichnet, dass** jedem der Fahrzeugräder an der Vorderachse (3) und an der Hinterachse (17) je ein Radsensor (26) zugeordnet ist, die zur Erfassung der Drehzahldifferenz (Δn₁) auch bei der ReibwertErmittlung einsetzbar sind:

5. Fahrzeug nach einem der vorhergehenden Ansprüche, **dadurch gekennzeichnet, dass** das Antriebssystem des Fahrzeugs eine Momentenverteilungseinheit (25, 36) aufweist, mit der auf eine fahrerseitige Vorgabe eine Momentenverteilung des Antriebsmoments (M_{ges}) auf die Vorderachse (3) und die Hinterachse (17) einstellbar ist, wobei zur Reibwert-Ermittlung die Momentenverteilungseinheit (25, 36) eine ungleichmäßige Momentenverteilung mit sich einstellender Momentendifferenz (ΔM₁) festlegt.

6. Fahrzeug nach einem der vorhergehenden Ansprüche, **dadurch gekennzeichnet, dass** zur Durchführung einer Fahrzeugverzögerung eine elektronische Steuereinrichtung (25) des Fahrzeugs unter Berücksichtigung des maximal möglichen Rekuperationsmoments (M_{R,Max}) ein Bremsmoment ermittelt, mit dem die Fahrzeugradbremsen beaufschlagbar sind.

7. Fahrzeug nach einem der vorergehenden Ansprüche, **dadurch gekennzeichnet, dass** die Momentenverteilungseinheit (36) ein Zwischenachsdifferenzial ausgebildet ist, das das Antriebsmoment auf ein Vorderachs- und ein Hinterachsdifferenzial (41, 43) verteilt, über die die Vorder- und Hinterräder antreibbar sind, wobei das Zwischenachsdifferenzial (36) eine die Abtriebsmomentenverteilung beeinflussende Kupplung aufweist, die abhängig von Betriebsparametern des Fahrzeugs zur variablen Verteilung der Antriebsmomente ansteuerbar ist.

## Claims

1. Vehicle having an all-wheel drive system in which the front axle (3) and the rear axle (17) of the vehicle can be driven with front-axle and rear-axle torques (M_{VA}, M_{HA}) which are different sizes, wherein a difference (Δn₁) in rotational speed between a front-axle-side rotational speed (n_{VA}) and a rear-axle-side rotational speed (n_{HA}) is produced from a torque difference (ΔM₁) between the front-axle torque (M_{VA}) and the rear-axle torque (M_{HA}), wherein the vehicle has a unit (27) for determining a coefficient of friction (µ₀, µ₁, µ₂) of the road, which unit senses the difference (Δn₁) in rotational speed, and in that the unit (27) determines the coefficient of friction (µ₀, µ₁, µ₂) of the road on the basis of a value pair (W₁) which is composed of the difference (Δn₁) in rotational speed and the difference (ΔM₁) in torque or a parameter which correlates therewith, and the drive torque of the vehicle can be generated by at least one electric machine (19) which, in a recuperation mode, induces an electrical voltage on exertion of a recuperation torque (M_{R}) on the vehicle wheels of the front axle (3) and/or of the rear axle (17), **characterised in that** the electric machine is assigned a recuperation manager (31), which limits the recuperation torque (M_{R}) that can be exerted on the vehicle wheels of the front axle (3) and of the rear axle (17) to an upper limit value, in other words, a maximum possible recuperation torque (M_{R,max}), and **in that** the limit torque (M_{R,max}) and/or the distribution of the recuperation torque (M_{R}) on the front axle (3) and the rear axle (17) can be varied according to the determined coefficient of friction (µ₀, µ₁, µ₂).

2. Vehicle according to claim 1, **characterised in that** an engine map (29) is recorded in the unit (27), from which the coefficient of friction (µ₀, µ₁, µ₂) of the road can be assessed on the basis of the set torque difference (ΔM₁) and the sensed difference (Δn₁) in rotational speed.

3. Vehicle according to claim 2, **characterised in that** the engine map (29) is generated on roads with known coefficient of friction (µ₀, µ₁, µ₂), and **in that** on specification of different torque differences (ΔM) the respective resulting differences (Δn) in rotational speed can be sensed, wherein the value pairs (W) resulting from the torque differences (ΔM) and the differences (Δn) in rotational speed can be entered in the engine map (29).

4. Vehicle according to one of the preceding claims, **characterised in that** a wheel sensor (26) is assigned to each vehicle wheel on the front axle (3) and on the rear axle (17), which can also be used during the determination of the coefficient of friction to sense the difference (Δn₁) in rotational speed.

5. Vehicle according to one of the preceding claims, **characterised in that** the drive system of the vehicle comprises a torque distribution unit (25, 36) which, on specification by the driver, can be used to set a torque distribution of the drive torque (M_{ges}) on the front axle (3) and the rear axle (17), wherein to determine the coefficient of friction, the torque distribution unit (25, 36) stipulates an unequal torque distribution having self-adjusting torque differences (ΔM₁).

6. Vehicle according to one of the preceding claims, **characterised in that**, in order to decelerate the vehicle, an electronic control device (25) of the vehicle determines a braking torque taking account of the maximum possible recuperation torque (M_{R,max}), which can be applied to the vehicle wheel brakes.

7. Vehicle according to one of the preceding claims, **characterised in that** the torque distribution unit (36) is embodied as an interaxle differential which distributes the drive torque on a front axle differential and a rear axle differential (41, 43), via which the front and rear wheels can be driven, wherein the interaxle differential (36) comprises a clutch influencing the drive torque distribution, which can be controlled dependent on operating parameters of the vehicle for variable distribution of the drive torque.

## Revendications

1. Véhicule avec un système de transmission intégrale, selon lequel l'essieu avant (3) et l'essieu arrière (17) du véhicule peuvent être entraînés avec des couples d'essieu avant et d'essieu arrière (M_{VA}, M_{HA}) de grandeur différente, une différence de vitesse de rotation (Δn₁) entre une vitesse de rotation côté essieu avant (n_{VA}) et une vitesse de rotation côté essieu arrière (n_{HA}) résultant d'une différence de couple (ΔM₁) entre les couples d'essieu avant et d'essieu arrière (M_{VA}, M_{HA}), le véhicule comportant une unité (27) pour la détermination d'un coefficient d'adhérence (µ₀, µ₁, µ₂) qui détecte la différence de vitesse de rotation (Δn₁), et l'unité (27) déterminant alors le coefficient d'adhérence (µ₀, µ₁, µ₂) sur la base d'une paire de valeurs (W₁) constituée de la différence de vitesse de rotation (Δn₁) et de la différence de couple (ΔM₁) ou de paramètres corrélés à celles-ci, et le couple moteur du véhicule pouvant être produit par au moins un moteur électrique (19) qui induit une tension électrique dans un mode de récupération en exerçant un couple de récupération (M_{R}) sur les roues de véhicule de l'essieu avant (3) et/ou de l'essieu arrière (17),
**caractérisé en ce qu'**un gestionnaire de récupération (31) est associé au moteur électrique (19), lequel gestionnaire de récupération limite le couple de récupération (M_{R}) pouvant être exercé sur les roues de véhicule de l'essieu avant (3) et de l'essieu arrière (17) à une valeur limite supérieure, c'est-à-dire à un couple de récupération maximal possible (M_{R,max}), et **en ce que** le couple limite (M_{R,max}) et/ou la répartition du couple de récupération (M_{R}) sur l'essieu avant (3) et sur l'essieu arrière (17) peuvent être modifiés en fonction du coefficient d'adhérence déterminé (µ₀, µ₁, µ₂).

2. Véhicule selon la revendication 1, **caractérisé en ce qu'**un réseau de caractéristiques (29) est enregistré dans l'unité (27), réseau de caractéristique à partir duquel le coefficient d'adhérence (µ₀, µ₁, µ₂) de la route peut être estimé à l'aide de la différence de couple (ΔM₁) réglée et de la différence de vitesse de rotation (Δn₁) détectée.

3. Véhicule selon la revendication 2, **caractérisé en ce que** la production du réseau de caractéristiques (29) s'effectue pour des routes avec un coefficient d'adhérence (µ₀, µ₁, µ₂) respectivement connu et **en ce que** les différences de vitesse de rotation (Δn) respectivement résultantes peuvent être détectées en prescrivant des différences de couple (ΔM) différentes, les paires de valeurs (W) qui résultent des différences de couple (ΔM) et des différences de vitesse de rotation (Δn) pouvant être enregistrées dans le réseau de caractéristiques (29).

4. Véhicule selon l'une des revendications précédentes, **caractérisé en ce qu'**un capteur de roue (26) est associé à chacune des roues de véhicule sur l'essieu avant (3) et sur l'essieu arrière (17), lesquels capteurs de roue peuvent aussi être utilisés pour la détection de la différence de vitesse de rotation (Δn₁) lors de la détermination de coefficient d'adhérence.

5. Véhicule selon l'une des revendications précédentes, **caractérisé en ce que** le système d'entraînement du véhicule comporte une unité de répartition de couple (25, 36) avec laquelle une répartition du couple moteur (M_{ges}) sur l'essieu avant (3) et sur l'essieu arrière (17) peut être réglée sur une prescription faite côté conducteur, l'unité de répartition de couple (25, 36) spécifiant pour la détermination de coefficient d'adhérence une répartition de couple irrégulière avec une différence de couple (ΔM₁) qui s'installe.

6. Véhicule selon l'une des revendications précédentes, **caractérisé en ce que**, pour la mise en oeuvre d'un ralentissement du véhicule, un dispositif de commande électronique (25) du véhicule détermine en tenant compte du couple de récupération maximal possible (M_{R,max}) un couple de freinage avec lequel les freins de roues de véhicule sont sollicités.

7. Véhicule selon l'une des revendications précédentes, **caractérisé en ce que** l'unité de répartition de couple (36) est conçue comme un différentiel entre essieux qui répartit le couple moteur sur un différentiel d'essieu avant et un différentiel d'essieu arrière (41, 43) par l'intermédiaire desquels les roues avant et arrière peuvent être entraînées, le différentiel entre essieux (36) comportant un embrayage qui influence la répartition de couple moteur et qui peut être commandé en fonction de paramètres de fonctionnement du véhicule pour la répartition variable des couples moteurs.
